# EUROPÄISCHE PATENTSCHRIFT

(11) **EP 3 169 927 B1**
(45) Veröffentlichungstag und Bekanntmachung des Hinweises auf die Patenterteilung: **07.10.2020**
(21) Anmeldenummer: 15748170.6
(22) Anmeldetag: 16.07.2015
(51) Int. Cl.: F16L 55/165, F16L 55/179, F16L 55/18, F16L 55/26

(54) **VERFAHREN UND VORRICHTUNG ZUM SANIEREN EINER IN EINEN HAUPTKANAL MÜNDENDEN GRUNDLEITUNG**
METHOD AND DEVICE FOR REPAIRING A GROUND PIPE LEADING INTO A MAIN CHANNEL
PROCÉDÉ ET DISPOSITIF DE RÉNOVATION D'UNE CONDUITE ENTERRÉE DÉBOUCHANT DANS UN CANAL PRINCIPAL

(30) Priorität: 16.07.2014 DE 102014010431
(43) Veröffentlichungstag der Anmeldung: 24.05.2017
(73) Patentinhaber: Zawisla, Klaus Dieter, 76751 Jockgrim (DE)
(72) Erfinder: Zawisla, Klaus Dieter, 76751 Jockgrim (DE); Olbrich, Norbert, 63694 Limeshain (DE)
(74) Vertreter: Lichti - Patentanwälte Partnerschaft mbB
(86) Internationale Anmeldenummer: PCT/EP2015/001472
(87) Internationale Veröffentlichungsnummer: WO 2016/008589

(56) Entgegenhaltungen:
- WO-A1-2004/104469
- DE-A1- 10 316 161
- DE-A1- 19 630 709
- GB-A- 2 260 384
- US-B1- 6 484 757

## Beschreibung

Die Erfindung betrifft ein Verfahren und eine Vorrichtung zum Schlauchlining einer zu sanierenden, in einen Hauptkanal mündenden Grundleitung.

In vielen Ländern existiert eine große Anzahl undichter und schadhafter Abwasserleitungen sowohl im privaten Abwasserleitungssystem als auch in der öffentlichen Kanalisation. Dies stellt eine große Gefahr für das Grundwasser dar. Das eingeleitete Abwasser enthält eine Vielzahl von Stoffen, die das Grundwasser verschmutzen können. Diese Gefahr ist relativ ernst, da Grundwasser in vielen Ländern die wichtigste Quelle zur Trinkwassergewinnung darstellt. Es ist also notwendig, defekte Leitungen zu sanieren.

Das Schlauchlining hat sich als ein gängiges Verfahren zur Sanierung defekter Leitungen etabliert, mit dem es möglich ist, undichte und schadhafte Abwasserleitungen schnell und kosteneffizient zu sanieren. Im Zuge dieses Verfahrens wird ein mit einem Harz-Härter-Gemisch getränkter, beispielsweise aus Kunststoff oder Textilfasern bestehender Schlauch (Schlauchliner) von einem Hauptkanal aus, der üblicherweise im öffentlichen Bereich verläuft, in eine zu sanierende Grundleitung, die vom Hauptkanal beispielsweise zu einem privaten Gebäude verläuft, eingeführt und von innen an die Wand der schadhaften Grundleitung gelegt. Danach wird der Aushärteprozess des Harz-Härter-Gemischs, beispielsweise durch UV-Strahlung oder Wärme, eingeleitet. Nach Aushärten des Harz-Härtergemischs ist ein stabiles Innenrohr gebildet und die Grundleitung abgedichtet und saniert.

Bei einem bekannten Schlauchlining-Verfahren wird der Schlauchliner von dem dem Hauptkanal abgewandten Ende der Grundleitung, d.h. von der Seite des privaten Gebäudes aus, in die Grundleitung eingebracht bzw. inversiert, bevor der Aushärteprozess eingeleitet wird. Dieser Vorgang erfordert den Zugang zum Haus- oder Grundstückanschluss der Grundleitung. Damit verbunden ist ein hoher rechtlicher Aufwand, um diesen Zugang zu erhalten. Ist dies nicht durchführbar, so muss der Anschluss offen und mit aufwändigen Grabungsarbeiten saniert werden.

Die Kommunen sind in der Regel lediglich für die Erhaltung der Leitungen in öffentlichen Bereichen, also beispielsweise von den Straßen bis zu einer Grundstücksgrenze zuständig. Leitungen, die auf einem privaten Grundstück verlaufen, müssen von dem Eigentümer des Grundstücks erhalten werden. Wenn man den Schlauchliner von dem dem Hauptkanal abgewandten Ende der Grundleitung, d.h. von dem privaten Grundstück aus in die Grundleitung einführt, wird auch immer der auf dem privaten Grundstück verlaufende Abschnitt der Grundleitung saniert, der an sich von dem Grundstückseigentümer zu erhalten wäre. Auf diese Weise haben die Kommunen hohe Sanierungskosten zu tragen, die teilweise auf Sanierungsarbeiten zurückgehen, für die die Kommunen gar nicht zuständig sind.

Es ist deshalb ein Verfahren zum Schlauchlining entwickelt worden, wie es beispielsweise in der EP 0 938 964 B1 beschrieben ist und bei dem bei zu Privatgrundstücken führenden Grundleitungen ein Zugang zum Hausanschluss nicht mehr notwendig ist. Stattdessen wird eine defekte Grundleitung ausgehend von einem Hauptkanal saniert, in den sie mündet. Der Zugang zu dem Hauptkanal erfolgt über einen öffentlich zugänglichen Kontrollschacht, der unmittelbar mit dem Hauptkanal verbunden ist. Der Schlauchliner wird dazu in eingeharztem Zustand in einer Haltevorrichtung angeordnet und mit seinem einen Endabschnitt an einem flanschartigen Haltekopf befestigt. Die Haltevorrichtung wird zusammen mit dem am Haltekopf angebrachten Schlauchliner durch den Kontrollschacht in den Hauptkanal eingeführt. Die Haltevorrichtung wird im nächsten Schritt des Verfahrens in dem Hauptkanal unmittelbar vor die Mündung der Grundleitung positioniert und der Haltekopf wird direkt an dem Mündungsquerschnitt der Grundleitung befestigt. Daraufhin wird der Schlauchliner durch Verwendung von Druckluft aus dem Haltekopf in Längsrichtung der Grundleitung in diese vorgeschoben. Nach dem Ende des Vorschubvorgangs wird der Schlauchliner aufgeweitet und liegt dadurch an der Innenwandung der zu sanierenden Grundleitung an. Daraufhin wird der Aushärtevorgang des Harzes gestartet. Nach dem Aushärten des Schlauchliners wird die Haltevorrichtung zunächst aus dem Hauptkanal und dann aus dem Kontrollschacht entfernt.

Das bekannte Verfahren ist aufgrund des verwendeten Haltekopfes, der im Mündungsbereich der Grundleitung fixiert werden muss und durch den hindurch der Schlauchliner in die Grundleitung eingefahren wird, in ihrem Anwendungsbereich nur für Durchmesser des Hauptkanals und/oder der Grundleitung oberhalb eines gewissen Mindestwertes einsetzbar. Die dadurch sich ergebenden Einschränkungen stehen der Anwendung dieses Verfahrens gerade im Bereich von privaten Hausanschlüssen im Wege, da diese eher kleine Leitungsdurchmesser aufweisen. Im Aushärteprozess treten bedingt durch das Einleiten heißer Luft in den offenen Schlauchliner Dämpfe am Hausanschluss der Grundleitung aus, was zu Beschädigungen führen kann.

Es ist bekannt, die Positionierung des Haltekopfes vor der Mündung der Grundleitung im Hauptkanal mittels einer Kamera zu beobachten. Das Vorschieben des Schlauchliners in die Grundleitung lässt sich dabei jedoch nicht mittels einer Kamera beobachten, da der Haltekopf, der vor der Mündung der Grundleitung sitzt, den Blick auf die Grundleitung versperrt. Dadurch wird das Vorschieben des Schlauchliners in die Grundleitung relativ schwierig und ist mit einem gesteigerten Zeit- und Materialaufwand verbunden.

Im Oberbegriff des Patentanspruchs 1 wird von einem Verfahren zum Schlauchlining einer zu sanierenden, in einen Hauptkanal mündenden Grundleitung ausgegangen, wie es in der US 6,484,757 B1 gezeigt ist.

Gemäß der US 6,484,757 B1 wird ein Schlauchliner in Form eines mit Hartz getränkten Schlauches mit einer Haltevorrichtung verbunden, wobei der Endbereich des Schlauchliners auf der Außenseite der Haltevorrichtung an einem Klemmkopf verklemmt wird. Dabei wird die Haltevorrichtung im Hauptkanal angeordnet und der Klemmkopf wird in die Grundleitung eingeführt und dort verklemmt. Anschließend wird der Schlauchliner durch den in der Grundleitung gehaltenen Klemmkopf hindurch inversiert und dadurch in die zu sanierende Grundleitung eingeführt. Der Schlauchliner wird an der Leitungswandung der Grundleitung angelegt und danach ausgehärtet. Das Einführen des Klemmkopfes in die Grundleitung und insbesondere eine exakte Positionierung des Klemmkopfes in der Grundleitung ist schwierig und damit zeit- und kostenaufwendig.

Die DE 196 30 709 A1 zeigt ein Verfahren zum Einführen einer Gummiblase zusammen mit einem Führungskabel in eine Zweigleitung bzw. Grundleitung. Die Einführbewegung erfolgt aus einem in dem Hauptkanal befindlichen Roboter mittels einer Führung, die an einer vorderen Fahreinheit angeordnet ist.

Der Erfindung liegt die Aufgabe zugrunde, ein Verfahren der genannten Art vorzusehen, mit dem sich eine Grundleitung, die von einem Hauptkanal abzweigt, mittels Schlauchlining kostengünstig und zuverlässig sanieren lässt. Ferner soll eine entsprechende Vorrichtung geschaffen werden, mit der sich das Verfahren sicher durchführen lässt.

Die Aufgabe wird durch ein Verfahren mit den Merkmalen des Anspruchs 1 gelöst. Dabei ist vorgesehen, dass die Haltevorrichtung mit dem Schlauchliner im Hauptkanal mit einem Abstand a zur Mündung der Grundleitung positioniert wird und dass der Schlauchliner ausgehend von der Haltevorrichtung längs des Hauptkanals und insbesondere in Richtung der Längsachse des Hauptkanals vorgeschoben und mittels eines Führungsteils umgelenkt und aus dem Hauptkanal in die Grundleitung eingeführt wird.

Dies hat zur Folge, dass der Schlauchliner von dem Hauptkanal aus gezielt in die Grundleitung eingeführt werden kann. Somit ist eine präzise Bestimmung der Länge des Schlauchliners möglich und das Schlauchlining in einer großen Spanne von Durchmessern der Hauptkanäle und Grundleitungen durchführbar. Aufgrund der Umlenkung des Schlauchliners durch das Führungsteil ist eine kompakte Anordnung der Komponenten möglich.

Da die Haltevorrichtung nicht unmittelbar vor der Mündung der Grundleitung, sondern im Abstand a versetzt zu dieser im Hauptkanal angeordnet ist, ist der Mündungsbereich der Grundleitung nicht durch die Haltevorrichtung versperrt oder abgedeckt und kann somit während des gesamten Verfahrens beobachtet und überwacht werden. Der Abstand a ist mindestens so groß, dass ein Klemmkopf der Haltevorrichtung mit dem daran befestigten Endabschnitt des Schlauchliners nicht vor der Mündung der Grundleitung liegt, d.h. die projizierte Fläche der Mündung auf den Hauptkanal nicht überschneidet. Zu Beginn der Ausfahr- oder Vorschubbewegung des Schlauchliners befindet sich dieser vollständig im Hauptkanal im Abstand zur Mündung der Grundleitung.

Es ist vorgesehen, das Führungsteil im Hauptkanal unmittelbar vor der Mündung der Grundleitung zu positionieren. Damit wird ein gezieltes Einführen des Schlauchliners auf dem kürzesten Weg in die Grundleitung ermöglicht.

Ferner ist vorgesehen, dass das Führungsteil im Hauptkanal auf seiner Position für das Umlenken des Schlauchliners fixiert wird, um somit die Stabilität der Position während des gesamten Vorganges zu gewährleisten. Das Führungsteil ist auf einem Fahrwagen angebracht und wird mit diesem unabhängig von der Haltevorrichtung im Hauptkanal verfahren. Dies ermöglicht eine große Flexibilität in der Anordnung des Führungsteils im Hauptkanal. Dabei ist vorgesehen, dass der Fahrwagen nach Positionierung des Führungsteils im Hauptkanal fixiert wird. Durch die Aufspaltung der Schlauchlinervorrichtung in eine Haltevorrichtung und einen Fahrwagen sind kleine Baugruppen vorhanden. Diese können einfach und schnell in den Hauptkanal eingeführt und wieder entnommen werden.

Erfindungsgemäß ist vorgesehen, den Schlauchliner zu inversieren, indem er beim Ausbringen umgestülpt wird. Vor dem Ausbringen bzw. Umstülpen befindet sich der Schlauchliners vollständig im Hauptkanal und wird erst nach und nach in die Grundleitung eingebracht. Hierdurch können theoretisch beliebige Längen einer Grundleitung saniert werden.

Eine weitere erfindungsgemäße Weiterbildung des Verfahrens beinhaltet die Ausbildung des Führungsteils als Halbschale oder als gebogene Rinne, um den sich vorschiebenden Schlauchliner in die Grundleitung einzuführen. Alternativ oder zusätzlich kann das Führungsteil als Käfig oder Drahtkorb ausgebildet sein. Diese Ausführungsform weist ein geringes Gewicht und eine einfache Geometrie auf und ermöglicht ein exaktes Vorschieben des Schlauchliners in die Grundleitung.

Im Zuge von Weiterentwicklungen des Verfahrens beträgt der Abstand der Haltevorrichtung zur Mündung der Grundleitung mindestens 3cm und insbesondere mindestens die Hälfte des Durchmessers der Grundleitung. Das Verfahren ermöglicht somit eine wesentlich größere Freiheit in der Positionierung der Haltevorrichtung in dem Hauptkanal und garantiert ein freies Blickfeld auf den sich vorschiebenden Schlauchliner.

Vorzugsweise wird die Positionierung des Führungsteils im Hauptkanal und/oder der Vorschub des Schlauchliners mittels einer oder mehrerer Kameras erfasst. Dies senkt den Material-, Zeit- und Kostenaufwand für das Verfahren erheblich, da die optimalen Positionen der beteiligten Komponenten unmittelbar erfassbar sind und gegebenenfalls sofort korrigierbar sind. Die vorgesehenen Kameras können dabei am Fahrwagen und/oder an der Haltevorrichtung befestigt werden. Ihre Bilddarstellung und/oder die Auswertung der Bilddarstellung kann vorzugsweise in einem Fahrzeug an der Erdoberfläche erfolgen.

Eine Weiterentwicklung des erfindungsgemäßen Verfahrens sieht vor, dass der Endbereich des Schlauchliners, der vorzugsweise nicht mit dem aushärtenden Harz-Härter-Gemisch getränkt ist, an der Haltevorrichtung befestigt wird, wobei er vorzugsweise an deren Außenseite pneumatisch verklemmt wird. Hierdurch ist die erforderliche mechanische Stabilität der Kopplung des Schlauchliners an die Haltevorrichtung gewährleistet. Der Schlauchliner kann dabei in einer an der Haltevorrichtung ausgebildeten Druckkammer angeordnet sein und von dieser in die Grundleitung eingebracht bzw. inversiert werden. Diese Ausgestaltung benötigt einen nur geringen Platzbedarf.

Zusätzlich können neben dem Schlauchliner ein Kalibrierschlauch und/oder ein Halteseil in die Druckkammer eingebracht werden, um eine kompakte Vorrichtung zu erhalten.

Der Aushärtevorgang des Schlauchliners wird in bevorzugter Ausgestaltung des erfindungsgemäßen Verfahrens mittels Wärme und/oder Dampf und/oder Druckluft und/oder Kaltaushärtung und/oder elektrisch leitfähiger Medien und/oder UV-Licht und/oder Mikrowellen gesteuert und ist somit an die vorherrschenden Begebenheiten in dem Hauptkanal und in der Grundleitung anpassbar.

Der Schlauchliner ist vorzugsweise an seinem dem Hauptkanal abgewandten Ende mittels einer Kappe verschlossen. Die Kappe des Schlauchliners verhindert hierbei ein Entweichen von warmem Dampf in Richtung des Hausanschlusses der Grundleitung B und ermöglicht darüber hinaus eine stabile Temperaturverteilung im Inneren des Schlauchliners. Der Dampfüberschuss und das entstehende Kondensat werden zu der Drucckammer zurückgeführt und aus dieser in den Hauptkanal abgeführt. Somit ist ein geschlossenes Dampfsystem gebildet und zuverlässig verhindert, dass Dampf an der dem Hauptkanal abgewandten Seite aus der Grundleitung austritt.

Ein in den Hauptkanal hineinragender Endbereich des Schlauchliners kann nach dem Aushärten des Schlauchliners wieder aus dem Hauptkanal entfernt werden, um diesen wieder vollständig nutzbar zu machen. Vorzugsweise wird das Entfernen durch einen in dem Hauptkanal verfahrbaren Fräsroboter erreicht.

Hinsichtlich der Vorrichtung wird die oben genannte Aufgabe durch die Merkmale des Anspruchs 10 gelöst. Weitere vorrichtungstechnische Ausgestaltungen und Merkmale ergeben sich aus der weiteren Beschreibung und/oder aus der Beschreibung des Verfahrens.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigen:
- Fig. 1: einen schematischen Schnitt eines Leitungssystems, in dem in einem Verfahrensschritt der Schlauchliner von dem Hauptkanal aus über ein Führungsteil in die Grundleitung vorgeschoben wird;
- Fig. 2: eine Fig. 1 entsprechende Darstellung, wobei in einem weiteren Verfahrensschritt der Schlauchliner in der Grundleitung positioniert ist und der Fahrwagen mit dem Führungsteil aus dem Hauptkanal weg bewegt wird;
- Fig. 3: eine Fig. 2 entsprechende Darstellung, wobei ein Fräsroboter in einem weiteren Verfahrensschritt den ausgehärteten Schlauchliner im Hauptkanal bearbeitet und
- Fig. 4: einen schematischen Schnitt eines an der Haltevorrichtung angebrachten Klemmkopfes.

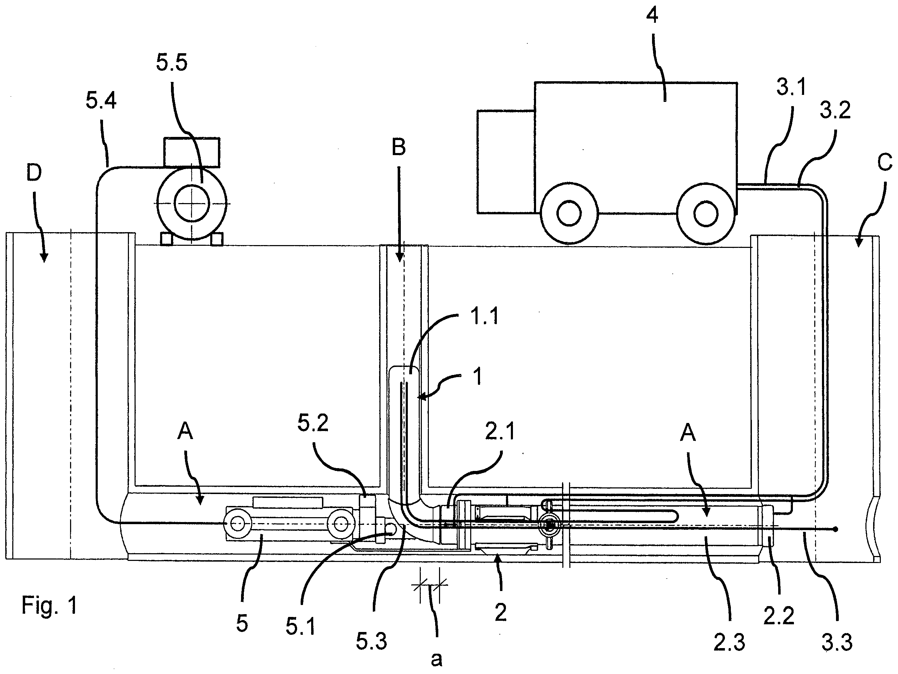

Fig. 1 zeigt in einer schematischen Schnittdarstellung eine Anordnung von Kanälen, Schächten und Leitungen und der am Verfahren beteiligten Komponenten. Ersichtlich sind ein im Wesentlichen horizontal verlaufender unterirdischer rohrförmiger Hauptkanal A, eine zu sanierende und in den Hauptkanal A mündende rohrförmige Grundleitung B und zwei öffentlich, beispielsweise von der Erdoberfläche, zugängliche im Wesentlichen vertikale Kontrollschächte C und D. Hierbei verbindet der Hauptkanal A die beiden Kontrollschächte C und D. Die Grundleitung B mündet an ihrem einen, gemäß Fig. 1 unteren Ende zwischen dem Kontrollschacht C und dem Kontrollschacht D in dem Hauptkanal A, ihr anderes Ende führt zu einem Hausanschluss eines Grundstücks. Von der Grundleitung B können weitere Seiteneinläufe abzweigen (nicht dargestellt).

Weiterhin ist ein Schlauchliner 1 dargestellt. Er weist im Wesentlichen Komponenten aus Textil- und/oder Glasfasern, Kunstoffen wie beispielweise Polymeren und/oder Thermoplasten und Vliesstoffe und/oder Filzlagen auf. Seine Länge ist mindestens auf die Länge des zu sanierenden Abschnitts der Grundleitung B dimensioniert. An dem in die Grundleitung B einzuführenden und später in der Grundleitung B angeordneten Endstück des Schlauchliners 1 ist eine Kappe 1.1 vorgesehen, welche den Schlauchliner 1 in Richtung des Hausanschlusses der Grundleitung B verschließt. Der Schlauchliner 1 wird im Verlauf des Verfahrens mit einem Zweikomponenten-Epoxyd- oder Kunstharz getränkt.

Eine Haltevorrichtung 2 ist in einen zwischen der Grundleitung B und dem gemäß Fig. 1 rechten Kontrollschacht C verlaufenden Abschnitt des Hauptkanals A eingebracht und weist an ihrer vorderen, zur Mündung der Grundleitung B weisenden Stirnseite einen Klemmkopf 2.1 auf. An diesem sind Klemmelemente zum Befestigen eines Teils und insbesondere eines Endes des Schlauchliners 1 an der Haltevorrichtung 2 angebracht. An der der Grundleitung B abgewandten Rückseite der Haltevorrichtung 2 ist ein Druckschlauch mit einer darin ausgebildeten Druckkammer 2.3 vorgesehen. Ferner sind Anschlüsse für eine Dampfleitung 3.1, eine Druckluftleitung 3.2 sowie ein Halteseil 3.3 an einem dem Kontrollschacht C zugewandten Endtopf 2.2 der Haltevorrichtung 2 vorhanden.

In einem zwischen der Grundleitung B und dem gemäß Fig. 1 linken Kontrollschacht D verlaufenden Abschnitt des Hauptkanals A und somit der Haltevorrichtung 2 gegenüberliegend ist in dem Hauptkanal A ein Fahrwagen 5 angeordnet. An dessen vorderem, zur Haltevorrichtung 2 gerichteten Ende ist eine Dreh- und Hubeinheit 5.1 befestigt, welche mit einem als Halbschale ausgebildeten Führungsteil 5.3 verbunden ist. Die Halbschale ist gemäß Fig. 1 so angeordnet, dass der Schlauchliner 1 beim Vorschieben längs deren Hauptkanal A auf sie auftrifft und von ihr umgelenkt und in die Grundleitung B eingeführt wird. Eine Kamera 5, die zur Haltevorrichtung 2 ausgerichtet ist, ist schwenkbar an der Oberseite des Fahrwagens 5 vorgesehen. Ein Roboterkabel 5.4 verbindet den Fahrwagen 5 über den Hauptkanal A und den Kontrollschacht D mit einer mobilen Fahrwagenhaspel 5.5.

An der Erdoberfläche befindet sich neben dem Zugang zu Kontrollschacht C ein Fahrzeug 4, beispielsweise ein LKW. In diesem sind alle für das Verfahren wesentlichen Komponenten, insbesondere auch die Vorrichtungen für das Anrühren des Schlauchliner-Harzes, mitgeführt.

In einem ersten Schritt des Verfahrens findet eine Kamerabefahrung der Kontrollschächte C und D, des Hauptkanals A und der Grundleitung B statt. Hierbei werden die Abmessungen der Rohre, Kanäle und Leitungen und die Struktur des Leitungssystem erforscht. Gegebenenfalls werden die von der Grundleitung B abzweigenden Seitenzuläufe erfasst. Besonderes Augenmerk liegt dabei auf die Lage der Mündung der Grundleitung B in dem Hauptkanal A und die Zufahrtswege zu dieser Mündung in dem Hauptkanal A ausgehend von dem Kontrollschacht C und dem Kontrollschacht D. Optional kann eine sich daran anschließende Spülung verschmutzter Leitungsabschnitte erfolgen, was die Erreichbarkeit und die visuelle Inspektion und somit die folgenden Verfahrensabläufe erleichtert.

Das Fahrzeug 4 befindet sich neben dem Zugang zum Kontrollschacht C. Aufgrund der durch die Begutachtung der zu sanierenden Grundleitung B erfassten Daten wird der Schlauchliner 1 entsprechend der Grundleitung B dimensioniert. Insbesondere ist die Länge des Schlauchliners 1 größer als jene des zu sanierenden Abschnitts der Grundleitung B. Im Fahrzeug 4 wird in einer dafür vorgesehenen Einrichtung ein aushärtendes Material, beispielsweise ein Zweikomponenten-Epoxyd-Harz oder ein Kunstharz hergestellt und das Mischverhältnis auf den Aushärteprozess des Schlauchliners 1 abgestimmt. Nach der Mischung wird der Schlauchliner 1 zu einem großen Teil in diesem Material vorzugsweise unter Unterdruck getränkt, wobei er nunmehr als ein Faserverbundwerkstoff ausgebildet ist. Die Textil- und Glasfasern haben dabei eine verstärkende Funktion, während die Vliesanteile als Formträger der Harzmatrix dienen. Das später in dem Hauptkanal A verbleibende Ende des Schlauchliners 1 wird nicht mit dem Harz imprägniert.

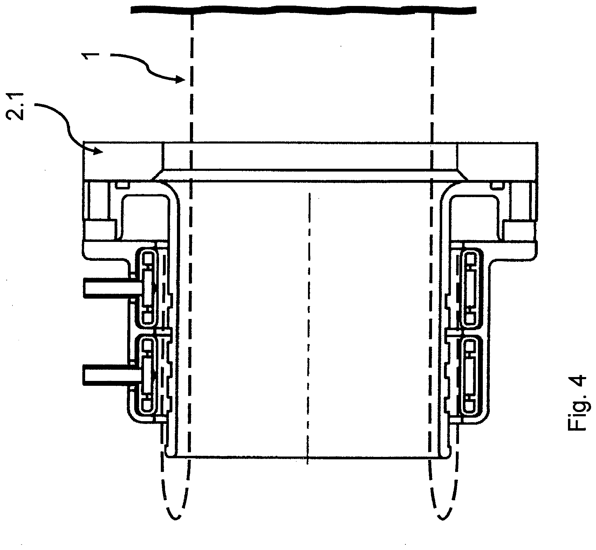

Nach Imprägnierung des Schlauchliners 1 mit dem Harz wird er umgestülpt und zusammen mit der Dampfleitung 3.1 und der Druckluftleitung 3.2 in die Druckkammer 2.3 eingebracht. Diese wird danach an der Haltevorrichtung 2 angebracht und gelagert. Ein Endabschnitt des Schlauchliners 1 wird an dem Klemmkopf 2.1 auf dessen radialer Außenseite über den Umfang umlaufend pneumatisch verklemmt, was insbesondere Fig. 4 zeigt. Durch das vorherige Umstülpen des Schlauchliners 1 liegt die später an der Grundleitung B anliegende Seite des Schlauchliners 1 jetzt im Innern der Anordnung bzw. der Haltevorrichtung 2.

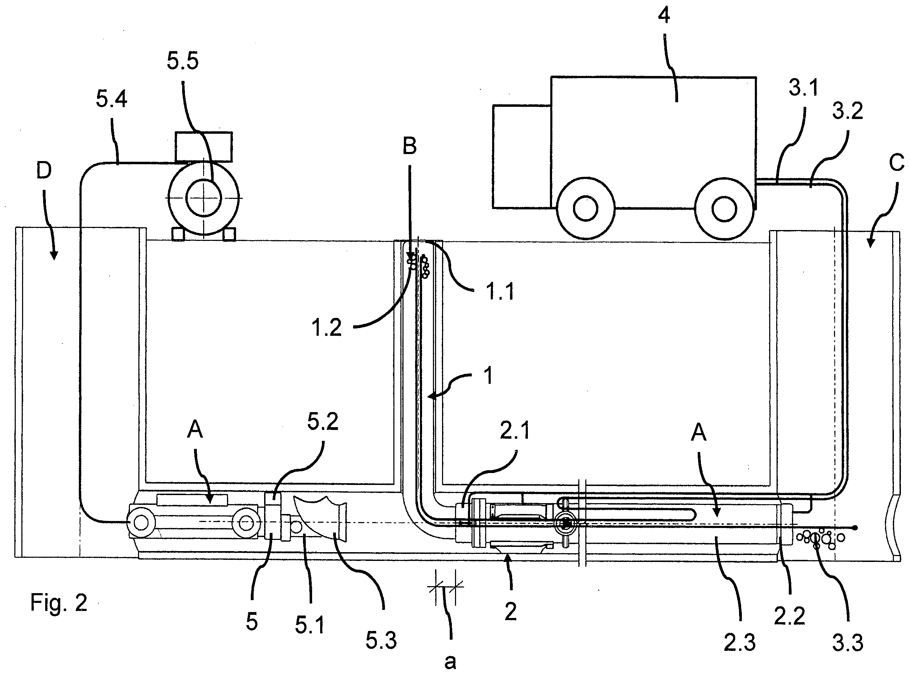

Die Haltevorrichtung 2 wird zusammen mit der Druckkammer 2.3 über den Kontrollschacht C in den Hauptkanal A eingebracht und die Druckkammer 2.3 wird an der Rückseite der Haltevorrichtung 2, welche zum Kontrollschacht C zeigt, befestigt. Die Haltevorrichtung 2 wird anschließend so in dem Hauptkanal A angeordnet, dass sie sich in der Nähe der einmündenden Grundleitung B, aber mit einem entlang der Erstreckungsrichtung des Hauptkanals A verlaufenden axialen Abstand a (siehe Fig. 1 und 2) zur Mündung der Grundleitung B befindet. Dieser Abstand a ist mindestens so groß, dass der Klemmkopf 2.1 der Haltevorrichtung 2 mit dem daran befestigten Endabschnitt des Schlauchliners 1 nicht vor der Mündung der Grundleitung B liegt, d.h. die projizierte Fläche der Mündung auf den Hauptkanal A nicht überschneidet.

Zum gleichen Zeitpunkt oder danach werden an der vorderen Stirnseite des Fahrwagens 5 die Dreh- und Hubeinheit 5.1 mit dem als Halbschale ausgebildetem Führungsteil 5.3 sowie die Kamera 5.2 befestigt. Über den Kontrollschacht D gelangt der Fahrwagen 5 in den Hauptkanal A und bewegt sich aus der der Haltevorrichtung 2 gegenüber liegenden Richtung auf die Mündung der Grundleitung B zu. Die Übertragung der Steuersignale findet dabei über das Roboterkabel 5.4 statt, welches an der mobilen Fahrwagenhaspel 5.5 angebracht ist.

Unter Kamerainspektion nimmt der Fahrwagen 5 seine Position in dem Hauptkanal A so ein, dass sich die Halbschale 5.3 unmittelbar unterhalb der Mündung der Grundleitung B befindet. Die Dreh- und Hubeinheit 5.1 nimmt die Feinjustage der Halbschale 5.3 vor. Nach Überprüfung durch die Kamera 5.2 wird der Fahrwagen 5 und somit auch die Halbschale 5.3 in ihrer Position im Hauptkanal A fixiert.

Über die Druckluftleitung 3.2 gelangt Druckluft in die in der Haltevorrichtung 2 ausgebildeten Druckkammer 2.3 und löst den Vorschub des Schlauchliners 1 aus. Dieser tritt auf der der Grundleitung B zugewandten Ende der Haltevorrichtung 2 an dem Klemmkopf 2.1 aus der Haltevorrichtung 2 in Richtung der Halbschale 5.3 und in Längsrichtung des Hauptkanals A aus. Dabei wird der Schlauchliner 1 inversiert bzw. umgestülpt, so dass die imprägnierte Seite außen zu liegen kommt. Beim Vorschub des Schlauchliners 1 trifft dieser auf das Führungsteil 5.3 bzw. die Halbschale auf und wird durch dieses in die Grundleitung B umgelenkt. Dieser Zustand ist in Fig. 1 ersichtlich. Der Schlauchliner 1 wird unter Zugabe weiterer Druckluft in der Grundleitung B vorgeschoben bis er schließlich mit der imprägnierten Seite den gesamten zu sanierenden Bereich der Grundleitung B abdeckt (Fig. 2). Der Vorschub des Schlauchliners 1 wird unter Kamerabeobachtung durch die Kamera 5.2 vollzogen. Dabei ermöglicht das an der Haltevorrichtung 2 angebrachte Halteseil 3.3 die Kontrolle über den Vorschubprozess. Die Kappe 1.1, die an dem in der Grundleitung B befindlichen, dem Hauptkanal A abgewandten Ende des Schlauchliners 1 angeordnet ist, verhindert ein Entweichen der Druckluft.

Nach der Positionierung des Schlauchliners 1 schließt sich der Aushärteprozess des Harzes an. Warmer Dampf gelangt über die Dampfleitung 3.1 und die Haltevorrichtung 2 in den Schlauchliner 1. Der Dampf wird innerhalb des Schlauchliners 1 über eine weitere Dampfleitung 1.2 (flexibler Schlauch) bis zu dem dem Hauptkanal A abgewandten Ende des Schlauchliners 1 geführt und dort in den Innenraum des Schlauchliners 1 abgegeben. Der Dampf setzt den Aushärteprozess der Matrix des Kunstharzes in Gang. Nach einer bestimmten Zeit, welche sich im Wesentlichen durch das Mischverhältnis der Matrix bestimmt, härtet der Schlauchliner 1 in der Grundleitung B aus. Der Druck in dem Schlauchliner 1 wird über die Druckluftleitung 3.2 aufrecht erhalten, um eine stabile Positionierung des Schlauchliners 1 in der Grundleitung B und eine vollflächige Anlage an der Innenwandung der Grundleitung B zu gewährleisten.

Die Kappe 1.1 des Schlauchliners 1 verhindert hierbei ein Entweichen von warmem Dampf in Richtung des Hausanschlusses der Grundleitung B und ermöglicht darüber hinaus eine stabile Temperaturverteilung im Inneren des Schlauchliners 1. Der Dampfüberschuss und das entstehende Kondensat werden zu der Druckkammer 2.2 zurückgeführt und aus dieser in den Hauptkanal A abgeführt. Zur Überwachung des Verfahrens können Temperatursensoren an beispielsweise vier Positionen angebracht werden: An der Schlauchlinerkappe 1.1, an dem an der Haltevorrichtung 2 angeordneten Ende der Druckleitung 3.1, am Klemmkopf 2.1 und/oder an dem Halteseil 3.3 an der Dampfaustrittsöffnung. Auf diese Weise ist eine Sensorik zur Prozessüberwachung und zur Qualitätssicherung des Sanierungsprozesses gegeben.

Nach dem Ende des Aushärteprozesses werden sowohl das Führungsteil 5.3 als auch der Fahrwagen 5 von der fixierten Position in dem Hauptkanal A gelöst und aus diesem herausgefahren. Dies ist in Fig. 2 dargestellt. Der Fahrwagen 5 einschließlich aller Komponenten, insbesondere des Führungsteils 5.3, wird über den Kontrollschacht D entnommen.

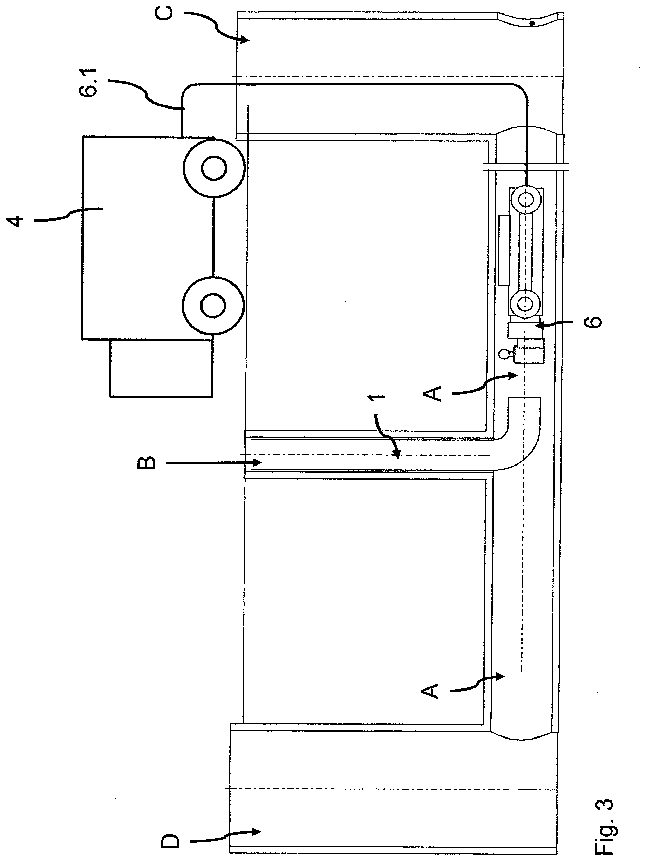

Nach erfolgter Aushärtung des Schlauchliners 1 wird dieser durch die Zufuhr von Druckluft über die Druckluftleitung 3.2 abgekühlt. Nach hinreichender Abkühlung des Schlauchliners 1 wird die Haltevorrichtung 2 im Hauptkanal A aus ihrer Fixierung gelöst und das mit dem Klemmkopf 2.1 verbundene Endstück des Schlauchliners 1 gelöst. Die Kappe 1.1 wird mittels eines damit verbundenen Seils abgerissen und der Schlauchliner 1 dadurch geöffnet. Die Haltevorrichtung 2 einschließlich aller damit verbundenen Komponenten wird über den Hauptkanal A und den Kontrollschacht C entnommen. Dabei können die Geräte geborgen werden, ohne dass sie in kostenintensiver Weise ausgegraben werden müssen. Anschließend wird ein Fräsroboter 6 in den Hauptkanal A eingeführt, der über eine Steuerleitung 6.1 mit dem Fahrzeug 4 verbunden ist (Fig. 3). Mit dem Fräsroboter 6 wird der im Hauptkanal A befindliche Teil des Schlauchliners 1, der aus der Grundleitung B in den Hauptkanal A hervorsteht und der zumindest weitestgehend nicht mit Harz imprägniert wurde, mittels des Fräsroboters 6 entfernt.

Unter Einsatz eines bogengängigen Fräsroboters (nicht dargestellt) werden eventuell in der Grundleitung B vorhandene Seiteneinläufe in an sich bekannter Weise wieder freigelegt bzw. aufgefräst. Danach wird die Grundleitung und mittels Kamerabefahrung überprüft. Damit ist die Grundleitung B saniert.

## Patentansprüche

1. Verfahren zum Schlauchlining einer zu sanierenden, in einen Hauptkanal (A) mündenden Grundleitung (B),
- wobei ein Schlauchliner (1) in Form eines mit Harz getränkten Schlauches mit einer Haltevorrichtung (2) verbunden wird, indem der Endbereich des Schlauchliners (1) an der Außenseite der Haltevorrichtung (2) an einem Klemmkopf (2.1) verklemmt wird,
- wobei die Haltevorrichtung (2) im Hauptkanal (A) angeordnet wird,
- wobei der Schlauchliner (1) ausgehend von der im Hauptkanal (A) angeordneten Haltevorrichtung (2) in die zu sanierende Grundleitung (B) eingeführt wird, indem der Schlauchliner (1) durch den Klemmkopf (2.1) hindurch inversiert wird und
- wobei der Schlauchliner (1) an die Leitungswand der Grundleitung (B) angelegt und danach ausgehärtet wird,
**dadurch gekennzeichnet,**
**dass** die Haltevorrichtung (2) und der Klemmkopf (2.1) mit dem Schlauchliner (1) im Hauptkanal (A) mit einem Abstand (a) zur Mündung der Grundleitung (B) so positioniert werden, dass der Klemmkopf (2.1) der Haltevorrichtung (2) mit dem daran befestigten Endabschnitt des Schlauchliners (1) nicht vor Mündung der Grundleitung (B) liegt,
**dass** ein Führungsteil (5.3) auf einem Fahrwagen (5) angebracht wird und mit diesem unabhängig von der Haltevorrichtung (2) im Hauptkanal (A) so verfahren und fixiert wird, dass das Führungsteil (5.3) im Hauptkanal (A) unmittelbar vor der Mündung der Grundleitung (B) positioniert wird, und
**dass** der Schlauchliner (1) ausgehend von der Haltevorrichtung (2) und dem Klemmkopf (2.1) längs des Hauptkanals (A) vorgeschoben und mittels des Führungsteils (5.3) umgelenkt und aus dem Hauptkanal (A) in die Grundleitung (B) eingeführt wird.

2. Verfahren nach Anspruch 1, **dadurch gekennzeichnet, dass** das Führungsteil (5.3) als Käfig und/oder Halbschale und/oder gebogene Rinne ausgebildet ist.

3. Verfahren nach Anspruch 1 oder 2, **dadurch gekennzeichnet, dass** der Abstand (a) der Haltevorrichtung (2) zur Mündung der Grundleitung (B) mindestens die Hälfte des Durchmessers der Grundleitung (B) beträgt.

4. Verfahren nach einem der Ansprüche 1 bis 3, **dadurch gekennzeichnet, dass** die Positionierung des Führungsteils (5.3) im Hauptkanal (A) und/oder der Vorschub des Schlauchliners (1) mittels einer Kamera (5.2) erfasst wird.

5. Verfahren nach einem der Ansprüche 1 bis 4, **dadurch gekennzeichnet, dass** der Schlauchliner (1) in einer an der Haltevorrichtung (2) angebrachten Druckkammer (2.3) aufgenommen ist und aus dieser zum Einführen in die Grundleitung (B) inversiert wird.

6. Verfahren nach Anspruch 5, **dadurch gekennzeichnet, dass** zusätzlich zu dem Schlauchliner (1) ein Kalibrierschlauch und/oder ein Halteseil (3.3) in die Druckkammer (2.3) eingebracht wird.

7. Verfahren nach einem der Ansprüche 1 bis 6, **dadurch gekennzeichnet, dass** der Aushärtevorgang des Schlauchliners (1) mittels Wärme und/oder Dampf und/oder Druckluft und/oder Kaltaushärtung und/oder elektrisch leitfähiger Medien und/oder UV-Licht und/oder Mikrowellen gesteuert wird.

8. Verfahren nach einem der Ansprüche 1 bis 7, **dadurch gekennzeichnet, dass** ein in den Hauptkanal (A) hineinragender Endbereich des Schlauchliners (1) nach dem Aushärten des Schlauchliners (1) entfernt wird.

9. Verfahren nach Anspruch 8, **dadurch gekennzeichnet, dass** der in den Hauptkanal (A) hineinragende Endbereich des Schlauchliners (1) durch einen in dem Hauptkanal (A) verfahrbaren Fräsroboter (6) entfernt wird.

10. Vorrichtung zum Schlauchlining einer zu sanierenden, in einen Hauptkanal (A) mündende Grundleitung (B) mit dem Verfahren nach einem der Ansprüche 1 bis 9, mit einer im Hauptkanal (A) anzuordnenden und dort zu fixierenden Haltevorrichtung (2) mit einem Klemmkopf (2.1), an dem ein Endbereich eines Schlauchliners (1) in Form eines mit Harz getränkten Schlauches anbringbar ist, einem von der Haltevorrichtung (2) unabhängigen Fahrwagen (5), der im Hauptkanal (A) positionierbar und fixierbar ist und der ein Führungsteil (5.3) trägt, das unmittelbar vor der Mündung der Grundleitung (B) in dem Hauptkanal (A) positionierbar ist, und einer Fördervorrichtung, mittels der der Schlauchliner (1) aus der Haltevorrichtung (2) in den Hauptkanal (A) ausfahrbar und unter Umlenkung durch das Führungsteil (5.3) in die Grundleitung (B) einbringbar ist.

## Claims

1. Method for tubular lining of an underground pipe (B) to be restored and opening into a main sewer (A),
- wherein a tube liner (1) in the form of a resin-saturated tube is connected to a holding apparatus (2) in that the end region of the tube liner (1) is clamped to a clamping head (2.1) at the outer side of the holding apparatus (2),
- wherein the holding apparatus (2) is arranged in the main sewer (A),
- wherein the tube liner (1), proceeding from the holding apparatus (2) arranged in the main sewer (A), is introduced into the underground pipe (B) to be restored in that the tube liner (1) is inverted through the clamping head (2.1), and
- wherein the tube liner (1) is placed against the pipe wall of the underground pipe (B) and subsequently cured,
**characterized**
**in that** the holding apparatus (2) and the clamping head (2.1) are positioned with the tube liner (1) in the main sewer (A) at a distance (a) from the mouth of the underground pipe (B) such that the clamping head (2.1) of the holding apparatus (2), with the end portion of the tube line (1) that is fastened thereto, is not situated in front of the mouth of the underground pipe (B),
**in that** a guide part (5.3) is attached to a carriage (5) and, by way of the latter, is, independently of the holding apparatus (2), moved and fixed in the main sewer (A) such that the guide part (5.3) is positioned immediately in front of the mouth of the underground pipe (B), and
**in that** the tube liner (1), proceeding from the holding apparatus (2) and the clamping head (2.1), is pushed forwards along the main sewer (A) and, by means of the guide part (5.3), diverted and introduced into the underground pipe (B) from the main sewer (A).

2. Method according to Claim 1, **characterized in that** the guide part (5.3) is formed as a cage and/or half-shell and/or curved channel.

3. Method according to Claim 1 or 2, **characterized in that** the distance (a) of the holding apparatus (2) from the mouth of the underground pipe (B) is at least half the diameter of the underground pipe (B).

4. Method according to one of Claims 1 to 3, **characterized in that** the positioning of the guide part (5.3) in the main sewer (A) and/or the pushing-forwards of the tube liner (1) are/is recorded by means of a camera (5.2).

5. Method according to one of Claims 1 to 4, **characterized in that** the tube liner (1) is accommodated in a pressure chamber (2.3) attached to the holding apparatus (2) and, for insertion into the underground pipe (B), is inverted out of said pressure chamber.

6. Method according to Claim 5, **characterized in that**, in addition to the tube liner (1), a calibration tube and/or a holding rope (3.3) are/is introduced into the pressure chamber (2.3).

7. Method according to one of Claims 1 to 6, **characterized in that** the curing process for the tube liner (1) is controlled by means of heat and/or steam and/or compressed air and/or cold curing and/or electrically conductive media and/or UV light and/or microwaves.

8. Method according to one of Claims 1 to 7, **characterized in that** an end region of the tube liner (1) that projects into the main sewer (A) is removed after the curing of the tube liner (1).

9. Method according to Claim 8, **characterized in that** the end region of the tube liner (1) that projects into the main sewer (A) is removed by a milling robot (6) which is able to be moved in the main sewer (A).

10. Apparatus for tubular lining of an underground pipe (B) to be restored and opening into a main sewer (A) using the method according to one of Claims 1 to 9, having a holding apparatus (2), which is to be arranged in the main sewer (A) and fixed there and has a clamping head (2.1) to which an end region of a tube liner (1) in the form of a resin-saturated tube is able to be attached, having a carriage (5), which is independent of the holding apparatus (2) and is able to be positioned and fixed in the main sewer (A) and bears a guide part (5.3) which is able to be positioned in the main sewer (A) immediately in front of the mouth of the underground pipe (B), and having a conveying apparatus, by means of which the tube liner (1) is able to be moved out of the holding apparatus (2) into the main sewer (A) and, with diversion by the guide part (5.3), is able to be introduced into the underground pipe (B).

## Revendications

1. Procédé de revêtement de tuyau flexible d'une conduite enterrée (B) à rénover débouchant dans un canal principal (A) ;
- un revêtement de tuyau flexible (1) prenant la forme d'un tuyau flexible imprégné de résine étant relié à un dispositif de maintien (2) en coinçant la région d'extrémité du revêtement de tuyau flexible (1) au niveau d'une tête de serrage (2.1), au niveau du côté extérieur du dispositif de maintien (2) ;
- le dispositif de maintien (2) étant disposé dans le canal principal (A) ;
- le revêtement de tuyau flexible (1) étant introduit, à partir du dispositif de maintien (2) disposé dans le canal principal (A), dans la conduite enterrée (B) à rénover en inversant le revêtement de tuyau flexible (1) traversant la tête de serrage (2.1) ; et
- le revêtement de tuyau flexible (1) étant placé contre la paroi de conduite de la conduite enterrée (B) et ensuite durci ;
**caractérisé en ce que** :
le dispositif de maintien (2) et la tête de serrage (2.1) sont positionnés avec le revêtement de tuyau flexible (1) dans le canal principal (A) à une certaine distance (a) par rapport à l'embouchure de la conduite enterrée (B) de telle sorte que la tête de serrage (2.1) du dispositif de maintien (2) ne repose pas, avec la section d'extrémité du revêtement de tuyau flexible (1) y étant fixée, devant l'embouchure de la conduite enterrée (B) ;
qu'une partie de guidage (5.3) est placée sur un chariot motorisé (5) et déplacée et fixée de telle sorte avec celui-ci dans le canal principal (A), indépendamment du dispositif de maintien (2), que la partie de guidage (5.3) est directement positionnée devant l'embouchure de la conduite enterrée (B) dans le canal principal (A) ; et
que le revêtement de tuyau flexible (1) est poussé, à partir du dispositif de maintien (2) et de la tête de serrage (2.1), le long du canal principal (A) et dévié à l'aide de la partie de guidage (5.3) et introduit, au sortir du canal principal (A), dans la conduite enterrée (B).

2. Procédé selon la revendication 1, **caractérisé en ce que** la partie de guidage (5.3) est réalisée sous la forme d'une cage et/ou d'une demi-coque et/ou d'une rigole incurvée.

3. Procédé selon la revendication 1 ou 2, **caractérisé en ce que** la distance (a) entre le dispositif de maintien (2) et l'embouchure de la conduite enterrée (B) est au moins de la moitié du diamètre de la conduite enterrée (B).

4. Procédé selon l'une quelconque des revendications 1 à 3, **caractérisé en ce que** le positionnement de la partie de guidage (5.3) dans le canal principal (A) et/ou dans l'avancement du revêtement de tuyau flexible (1) est détecté au moyen d'une caméra (5.2).

5. Procédé selon l'une quelconque des revendications 1 à 4, **caractérisé en ce que** le revêtement de tuyau flexible (1) est logé dans un compartiment de pression (2.3) disposé au niveau du dispositif de maintien (2) et inversé hors de celui-ci pour introduction dans la conduite enterrée (B).

6. Procédé selon la revendication 5, **caractérisé en ce qu'**un tuyau flexible étalonné et/ou une corde de maintien (3.3) sont amenés dans le compartiment de pression (2.3) en sus du revêtement de tuyau flexible (1).

7. Procédé selon l'une quelconque des revendications 1 à 6, **caractérisé en ce que** le processus de durcissement du revêtement de tuyau flexible (1) est commandé par chaleur et/ou vapeur et/ou air comprimé et/ou durcissement à froid et/ou agents électriquement conducteurs et/ou lumière UV et/ou micro-ondes.

8. Procédé selon l'une quelconque des revendications 1 à 7, **caractérisé en ce qu'**une région d'extrémité du revêtement de tuyau flexible (1) rentrant dans le canal principal (A) est écartée après durcissement du revêtement de tuyau flexible (1).

9. Procédé selon la revendication 8, **caractérisé en ce que** la région d'extrémité du revêtement de tuyau flexible (1) rentrant dans le canal principal (A) est écartée par un robot de fraisage (6) conduit dans le canal principal (A).

10. Dispositif de revêtement de tuyau flexible d'une conduite enterrée (B) à rénover débouchant dans un canal principal (A) à l'aide du procédé selon l'une quelconque des revendications 1 à 9, avec un dispositif de maintien (2) à agencer et à fixer dans le canal principal (A), avec une tête de serrage (2.1) au niveau de laquelle une région d'extrémité d'un revêtement de tuyau flexible (1) peut être amenée sous la forme d'un tuyau flexible imprégné de résine, avec un chariot motorisé (5) indépendant du dispositif de maintien (2) et pouvant être positionné et fixé dans le canal principal (A) et supportant une partie de guidage (5.3) pouvant être positionnée directement devant l'embouchure de la conduite enterrée (B) dans le canal principal (A) et avec un dispositif de transport à l'aide duquel le revêtement de tuyau flexible (1) peut être sorti du dispositif de maintien (2) jusque dans le canal principal (A) et amené dans la conduite enterrée (B) par déviation par la partie de guidage (5.3).
